# EUROPÄISCHE PATENTSCHRIFT

(11) **EP 2 217 983 B1**
(45) Veröffentlichungstag und Bekanntmachung des Hinweises auf die Patenterteilung: **20.07.2011**
(21) Anmeldenummer: 08856650.0
(22) Anmeldetag: 27.11.2008
(51) Int. Cl.: G05D 7/06

(54) **VERFAHREN ZUM BETRIEB EINES STRÖMUNGSTECHNISCHEN LEITUNGSSYSTEMS**
METHOD FOR OPERATING A FLUIDIC PIPELINE SYSTEM
PROCÉDÉ DE FONCTIONNEMENT D'UN SYSTÈME DE CONDUITES DE TRANSPORT DE FLUIDE

(30) Priorität: 04.12.2007 DE 102007058211
(43) Veröffentlichungstag der Anmeldung: 18.08.2010
(73) Patentinhaber: Siemens Aktiengesellschaft, 80333 München (DE)
(72) Erfinder: SCHRÖDER, Dierk, 24238 Selent (DE)
(86) Internationale Anmeldenummer: PCT/EP2008/066303
(87) Internationale Veröffentlichungsnummer: WO 2009/071484

(56) Entgegenhaltungen:
- EP-A- 0 819 895
- WO-A-03/001312
- DE-A1- 19 912 588
- US-A- 2 638 912

## Beschreibung

In größeren strömungstechnischen Leitungssystemen, insbesondere Rohrleitungssystemen an Bord von Schiffen, werden gewöhnlich mehrere Verbraucher mit unterschiedlichen Medien versorgt. Bei einem Verbraucher kann es sich beispielsweise um einen Wärmetauscher, einen Hydraulikantrieb oder ein System mit Bedarf an kontinuierlicher Schmierstoffzufuhr, z.B. in einem Antrieb, handeln. Hydrodynamisch gesehen ist ein Verbraucher im Sinne dieser Erfindung ein Strömungskanal mit einem jeweils individuellen, ggf. veränderlichen Strömungswiderstand und einem individuellen Volumenstrombedarf eines Mediums. Ferner hat der Rohrstrang, über den ein Verbraucher an das Gesamtsystem angeschlossen ist, einen sich aus den räumlichen Gegebenheiten und dem transportierten Volumenstrom ergebenden Rohrleitungswiderstand. Beim Entwurf eines solchen Systems besteht die Aufgabe, die unterschiedlichen Anforderungen der einzelnen Verbraucher mittels geeigneter Maßnahmen, z.B. Blenden in den Rohrsträngen, so zu erfüllen, dass jeder Verbraucher zu jeder Zeit den von ihm benötigten Volumenstrom erhält. Die aktive Komponente des Systems (z.B. Pumpe, Verdichter) wird dabei mit fester, nicht variabler Drehzahl betrieben. Für das statische Verhalten eines solchen Systems ist diese Aufgabe heute hinreichend gut lösbar.

Für das dynamische Verhalten eines solchen Systems wird heutzutage im Schiffbau allgemein folgende Vorgehensweise angewandt: Ein Verbraucher wird mit einem Bypass und einem Regelorgan (z.B. Drei-Wege-Ventil) versehen. Der Bypass erhält nötigenfalls mittels einer Blende einen hydrodynamischen Widerstand, der demjenigen des Verbrauchers über einen weiten Bereich verschiedener Volumenströme möglichst ähnlich ist. Das Regelorgan steuert je nach Anforderung des Verbrauchers einen variablen Anteil des Volumenstromes, von 0% bis nötigenfalls bis zu 100%, über den Bypass ab. Durch den im Verbraucher und im Bypass nahezu gleichen hydrodynamischen Widerstand wird durch den Regelvorgang das Gesamtsystem und damit die parallel oder in Reihe geschalteten weiteren Verbraucher nicht beeinflusst und bleibt quasistatisch. Dies erleichtert die Regelung und begrenzt den Aufwand.

Darüber hinaus ist aus EP 0 819 895 A2 ein strömungstechnisches Leitungssystem bekannt, das in zwei Subsysteme aufgeteilt ist. Der Fluss in Zweigen dieser Subsysteme wird dabei durch Drosseln oder Ventile kalibriert, so dass das Gesamtsystem ausbalanciert ist.

Ausgehend von diesem Stand der Technik besteht die Aufgabe der Erfindung darin, den Energieverbrauch eines strömungstechnischen Leitungssystems der vorausgehend beschriebenen Art zu minimieren.

Diese Aufgabe wird erfindungsgemäß durch ein Verfahren nach Patentanspruch 1 gelöst. Vorteilhafte Ausgestaltungen sind in den Unteransprüchen angegeben.

Der Erfindung liegt die Erkenntnis zugrunde, dass durch das herkömmliche Absteuern des Volumenstromes einzelner Verbraucher über einen jeweiligen Bypass Leistungsverluste entstehen, die teilweise unnötig sind. Diese Verluste lassen sich minimieren, wenn man den Volumenstrom im Gesamtsystem minimiert, anstatt Medien in unnötig großen Mengen durch das System zu treiben.

Die Erfindung sieht vor, die Förderleistung der aktiven Komponente unter Berücksichtigung der von den einzelnen Verbrauchern angeforderten Volumenströme soweit zu reduzieren, dass bei mindestens einem Verbraucher keine individuelle Drosselung des Volumenstromes mehr nötig ist. Die Volumenströme der übrigen Verbraucher werden individuell auf das jeweils benötigte Maß gedrosselt. Auf diese Weise wird die Summe der Volumenströme aller Verbraucher minimiert.

Dies minimiert den Gesamtwiderstand des Systems, denn der Rohrleitungswiderstand steigt bei einem gegebenen System bekanntlich mit dem Quadrat des Volumenstroms, welcher durch den gegebenen Rohrquerschnitt transportiert wird. Da die Förderleistung der aktiven Komponente des Systems (z.B. Pumpe, Verdichter) dem Produkt aus Volumenstrom und aufzubringender Druckdifferenz entspricht, wird hierdurch die Förderleistung und folglich auch die von der aktiven Komponente benötigte Antriebsleistung minimiert.

Dies kann zwar zur Folge haben, dass die aktive Komponente abhängig von der Auslegung des Gesamtsystems und der Streuung der möglichen Betriebspunkte mit einem Wirkungsgrad betrieben wird, der ggf. auch signifikant vom möglichen Optimalwert abweicht, doch ist dies nicht entscheidend. Vielmehr kommt es vor allem darauf an, welche Leistung absolut für die Erfüllung der Systemfunktion aufgebracht werden muss. Diese ist bei der Erfindung niedriger als bei der zuvor beschriebenen herkömmlichen Betriebsweise.

Wenn der Gesamtvolumenstrom des Systems durch die Regelung der aktiven Komponente verringert wird, ergibt sich eine zusätzliche Reduktion der gesamten Verlustleistung dadurch, dass der Gesamtwiderstand in einem Leitungssystem mit dem Quadrat des sich verringernden Volumenstromes in den gegebenen Leitungen sinkt. Hierin liegt ein weiterer Vorteil der Erfindung.

Da es bei der Systemausführung gemäß dieser Erfindung nicht notwendig ist, einen annähernd konstanten Strömungswiderstand jedes einzelnen Verbrauchers gegenüber dem restlichen System zu gewährleisten, kann eine Installation von Bypässen um die Verbraucher entfallen. Hierdurch vereinfacht sich der apparative Aufbau des Systems.

Nachfolgend wird ein Ausführungsbeispiel der Erfindung anhand der Zeichnungen beschrieben. In diesen zeigt
- Fig. 1: den grundsätzlichen Aufbau eines erfindungsgemäßen strömungstechnischen Leitungssystems,
- Fig. 2: den grundsätzlichen Verlauf der Kennlinien der akti- ven Komponente und des passiven Teils eines strö- mungstechnischen Leitungssystems,
- Fig.3: den Ablauf der erfindungsgemäßen Systeminitiali- sierung als Flussdiagramm und
- Fig. 4: den Ablauf der erfindungsgemäßen Regelung der aktiven Komponente eines strömungstechnischen Leitungssystems als Flussdiagramm.

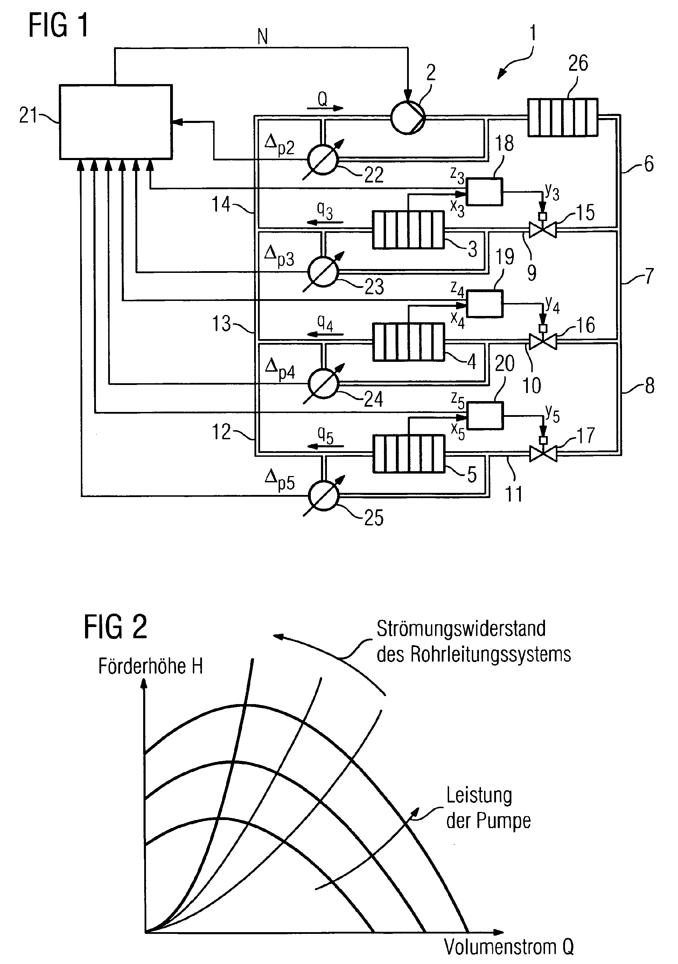

Einen schematischen Überblick über den Aufbau eines erfindungsgemäßen strömungstechnischen Leitungssystems 1 gibt Fig. 1. Dieses System 1 umfasst beispielhaft eine aktive Komponente in Form einer Pumpe 2, eine Vielzahl von zueinander parallel geschalteten Strömungskanälen bestimmter Funktion, die hier Verbraucher 3 bis 5 genannt werden, sowie eine Vielzahl von Rohrleitungen 6 bis 14, welche die einzelnen Verbraucher 3 bis 5 mit der Pumpe 2 verbinden. Üblicherweise weist ein reales System mehrere Pumpen z.B. in einer Pumpenstation auf, doch wird der Einfachheit halber in der Folge nur von einer Pumpe gesprochen.

Bei den Verbrauchern 3 bis 5 kann es sich beispielsweise um Kühler handeln. Die dargestellte Anzahl von drei Verbrauchern ist rein beispielhaft gemeint und nach oben hin nicht begrenzt. Die Rohrleitungen 9, 10 und 11 umfassen jeweils den gesamten allein dem jeweiligen Verbraucher 3, 4 oder 5 zugeordneten Teil des Leitungssystems und nicht nur den unmittelbar mit den jeweiligen Bezugszeichen 9, 10 und 11 gekennzeichneten Abschnitt.

Vor oder hinter jedem Verbraucher 3 bis 5 ist in jede Rohrleitung 9 bis 11 jeweils ein Drosselventil 15 bis 17 geschaltet, welches von einem jeweiligen Regler 18 bis 20 angesteuert wird. Die Regler 18 bis 20 erfassen an den Verbrauchern 3 bis 5 jeweilige Regelgrößen x₃ bis x₅ und geben an die Drosselventile 15 bis 17 darauf basierende Stellsignale y₃ bis y₅ aus. Dabei hängt die Art der Regelgrößen x₃ bis x₅ von der Funktion der Verbraucher 3 bis 5 ab. Falls es sich bei den Verbrauchern beispielsweise um Kühler handelt, sind die Regelgrößen x₃ bis x₅ Temperaturen. Gleichzeitig geben die Regler 18 bis 20 auch an einen Zentralregler 21 Meldesignale z₃ bis z₅ aus, in welche die Stellungen der Drosselventile 15 bis 17 sowie die Regelgrößen x₃ bis x₅ eingehen.

Die Pumpe 2 ist mit einem regelbaren Antrieb ausgestattet. Im Fall eines Elektromotors bedeutet dies eine Ansteuerung durch einen Frequenzumrichter mit variabler statt mit fester Frequenz. Hierdurch kann die Drehzahl der Pumpe 2 und damit der Volumenstrom des Gesamtsystems 1 durch die Pumpe 2 variiert werden. Der Antrieb der Pumpe 2 wird von dem Zentralregler 21 geregelt, der hierzu ein Stellsignal N für die Drehzahl der Pumpe 2 ausgibt.

Ferner sind sowohl die Pumpe 2, als auch die Verbraucher 3 bis 5 jeweils mit einer Messeinrichtung 22 bzw. 23 bis 25 ausgestattet, welche die jeweiligen Druckdifferenzen über der Pumpe bzw. über den einzelnen Verbrauchern 3 bis 5 messen und entsprechende Messsignale Δp₂ bzw. Δp₃ bis Δp₅ an den Zentralregler 21 abgeben.

Ferner enthält das Leitungssystem 1 in einer von dem Gesamtvolumenstrom Q durchströmten Rohrleitung 6 ein Ausgleichselement 26, welches die Wirkung der Verbraucher 3 bis 5 in Bezug auf den Transport von Energie und/oder Materie ausgleicht. Wenn es sich beispielsweise bei den Verbrauchern 3 bis 5 um Wärmetauscher handelt, durch welche das in dem Leitungssystem 1 strömende Medium Wärmeleistung aufnimmt, dann stellt das Ausgleichselement 26 einen Wärmetauscher dar, durch welchen das in dem Leitungssystem 1 strömende Medium Wärmeleistung an die Umgebung abgibt, so dass die Temperatur des Mediums stets innerhalb eines vorbestimmten Bereichs bleibt. Wenn das in dem Leitungssystem 1 strömende Medium in den Verbrauchern 3 bis 5 zum Teil materiell verbraucht wird, dann handelt es sich bei dem Ausgleichselement um ein Reservoir, aus dem eine entsprechende Menge des Mediums zugeführt wird, um die in dem Leitungssystem 1 vorhandene Menge stets annähernd konstant zu halten.

Zum Verständnis der Funktionsweise des erfindungsgemäßen Verfahrens wird nun anhand von Fig. 2 kurz auf die Kennlinien eines strömungstechnischen Leitungssystems 1 der hier betrachteten Art eingegangen. In Fig. 2 ist der Druck, auch als Förderhöhe H bezeichnet, über den gesamten Volumenstrom Q des Systems 1 dargestellt, wobei jeweils eine Kennlinienschar (die Drosselkurven der Pumpe) für das Verhalten der Pumpe 2 und eine Kennlinienschar (die Anlagenkennlinien) für das Verhalten des Leitungssystems 3 bis 17 dargestellt ist. Die Darstellung von Fig. 2 hat rein qualitativen Charakter.

Die drei von links nach rechts zunächst leicht ansteigenden und dann bis auf Null abfallenden Kennlinien (Drosselkurven) sind Pumpenkennlinien für verschiedene Drehzahlen, d.h. verschiedene Antriebsleistungen einer Pumpe 2, wobei die Pumpenkennlinien mit zunehmender Drehzahl hin zu größerer Förderhöhe (mit dem Quadrat der Drehzahländerung H₁/H=(n₁/n)²) und Volumenstrom (mit der Drehzahländerung Q₁/Q=n₁/n) verschoben sind. Die Leistungsaufnahme der Pumpe steigt (ohne Betrachtung von Lager- und Dichtungsverlusten) mit dem Kubik der Drehzahländerung (P₁/P=(n₁/n)³).

Die drei links bei Null beginnenden und progressiv ansteigenden Kennlinien (Anlagenkennlinien) sind Kennlinien eines an die Pumpe 2 angeschlossenen Leitungssystems 3 bis 17 für verschiedene Zustände desselben, d.h. für verschiedene Stellungen der Drosselventile 15 bis 17. Je stärker die Drosselwirkung, also der gesamte Strömungswiderstand des Leitungssystems 3 bis 17, umso mehr Förderhöhe H wird zur Erzielung eines bestimmten Volumenstromes Q benötigt und umso mehr Antriebsleistung ist folglich an der Pumpe 2 aufzuwenden.

Da der gesamte Volumenstrom Q sowohl die Pumpe 2, als auch das Leitungssystem 3 bis 17 durchströmt, ergibt sich der Arbeitspunkt des Gesamtsystems 1 als Schnittpunkt der jeweils gültigen Kennlinie der Pumpe 2 mit der jeweils gültigen Kennlinie des gesamten Leitungssystems 3 bis 17 und kann bei ausreichender Kenntnis aller Systemparameter numerisch berechnet werden. Herkömmlich wird sowohl mit konstanter Pumpenleistung, als auch mit möglichst konstantem Strömungswiderstand gearbeitet, also in einem einzigen möglichst konstanten Arbeitspunkt des Gesamtsystems 1.

Die vorliegende Erfindung verfolgt demgegenüber das Ziel, stets einen Arbeitspunkt des Gesamtsystems 1 mit möglichst geringem Strömungswiderstand des Leitungssystems 3 bis 17 zu wählen, damit ein insgesamt von den Verbrauchern 3, 4 und 5 benötigter Volumenstrom Q gegebener Größe mit möglichst geringer Pumpenleistung erzielt wird. Hierzu wird bei zeitlicher Variabilität des benötigten Volumenstromes Q einzelner Verbraucher eine zeitliche Variabilität sowohl des Strömungswiderstandes, als auch der Pumpenleistung zugelassen, so dass sich die jeweils gültigen Kennlinien der Pumpe 2 und des Leitungssystems 3 bis 17 laufend ändern und folglich der sich als Schnittpunkt der beiden Kennlinien ergebende Arbeitspunkt laufend verschiebt.

Bei Inbetriebnahme des strömungstechnischen Leitungssystems 1 nach Fig. 1 sind bestimmte Daten bekannt:
- Kennlinienfeld der Pumpe entsprechend Fig. 2
- Leistungsaufnahme der Pumpe an spezifischen Punkten des Kennlinienfeldes
- Strömungswiderstand der Drosselventile 15 bis 17
- Anzahl und Art der Verbraucher 3 bis 5
- Auslegung des Rohrleitungsnetzes 3 bis 17

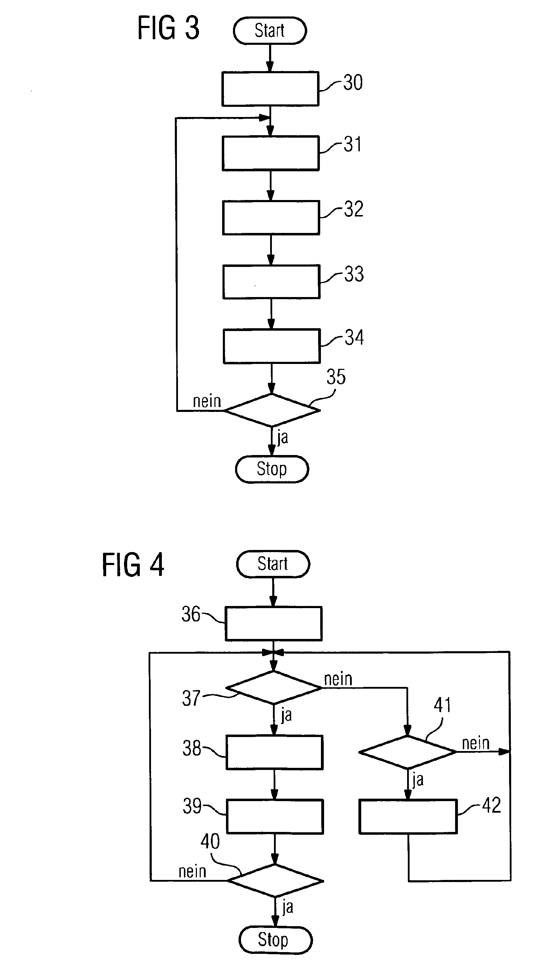

Zur erfindungsgemäßen Regelung des Systems 1 ist die Kenntnis der Volumenströme q₃ bis q₅ durch die einzelnen Verbraucher erforderlich. Um die Messung dieser Volumenströme q₃ bis q₅ über die Druckdifferenzen Δp₃ bis Δp₅ zu ermöglichen, wird vor der Inbetriebnahme des Systems 1 ein ggf. automatisiertes Initialisierungsverfahren durchgeführt, das nachfolgend anhand des Flussdiagramms von Fig. 3 erläutert wird.

Zunächst werden in Schritt 30 die Drosselventile 15 bis 17 aller Verbraucher 3 bis 5 vollständig geöffnet. Die Pumpe 2 wird dann auf Nennleistung gebracht und es wird die Druckdifferenz Δp₂ über der Pumpe 2 gemessen. Aus dem bekannten Kennlinienfeld der Pumpe 2 ergibt sich hieraus der minimale Strömungswiderstand des gesamten Leitungssystems 3 bis 17.

Dann wird im Schritt 31 ein neuer, d.h. bisher noch nicht bearbeiteter Verbraucher n ausgewählt und das diesem Verbraucher zugeordnete Drosselventil wird vollständig geöffnet. Bei der ersten Ausführung des Schrittes 31 nach dem schritt 30 ist dieses bereits geöffnet, bei späteren Ausführungen des Schrittes 31 jedoch nicht mehr.

Dann werden in Schritt 32 die Drosselventile aller anderen Verbraucher vollständig geschlossen. Wird beispielsweise der Verbraucher 3 ausgewählt und sein Drosselventil 15 in Schritt 31 geöffnet, dann werden in Schritt 32 die Drosselventile 16 und 17 der beiden anderen Verbraucher 4 und 5 geschlossen. Dadurch wird erreicht, dass der gesamte Volumenstrom Q des Systems 1 mit dem individuellen Volumenstrom qₙ des jeweils ausgewählten Verbrauchers n identisch ist.

Das Drosselventil des ausgewählten Verbrauchers n wird nun in Schritt 33 in verschiedene Stellungen gefahren, also das Stellsignal yₙ variiert, und es wird in jeder Stellung die Druckdifferenz Δpₙ über dem ausgewählten Verbraucher und die Druckdifferenz Δp₂ über der Pumpe 2 gemessen. Auf diese Weise wird eine Kennlinie von Δp₂ als Funktion von Δpₙ ermittelt. Dabei ist die Anzahl der Messpunkte je nach angestrebter Regelgenauigkeit festzulegen, da bei der späteren Weiterverwendung der aufgenommenen Kennlinie zwischen den Messpunkten interpoliert werden muss.

Weil jedem Wert der Druckdifferenz Δp₂ über das bekannte Kennlinienfeld der Pumpe 2 bei gegebener Antriebsleistung ein Volumenstrom Q durch die Pumpe 2 eindeutig zugeordnet ist, kann die in Schritt 33 ermittelte Kennlinie in Schritt 34 ohne weiteres in eine Kennlinie des gesamten Volumenstromes Q als Funktion der Druckdifferenz Δpₙ über dem ausgewählten Verbraucher n umgerechnet werden. Wegen der erzwungenen Identität des gesamten Volumenstromes Q mit dem individuellen Volumenstrom qₙ des ausgewählten Verbrauchers n ist diese in Schritt 34 erhaltene Kennlinie gleichzeitig die Kennlinie des individuellen Volumenstromes qₙ des ausgewählten Verbrauchers n als Funktion der Druckdifferenz Δpₙ.

In Schritt 35 wird geprüft, ob bereits alle Verbraucher in der vorausgehend beschriebenen Weise vermessen wurden oder nicht. Falls nicht wird zu Schritt 31 zurückgesprungen und dort ein neuer, bisher noch nicht vermessener Verbraucher ausgewählt. Falls ja ist das Initialisierungsverfahren beendet.

Das beschriebene Initialisierungsverfahren erlaubt es, im anschließenden Normalbetrieb des Systems 1 die individuellen Volumenströme der Verbraucher 3 bis 5 über die jeweiligen Druckdifferenzen Δp₃ bis Δp₅ zu erfassen und auf diese Weise den insgesamt von der Pumpe bereitzustellenden Volumenstrom Q zu bestimmen. Der erfindungsgemäße Normalbetrieb des Systems 1 wird nachfolgend anhand des Flussdiagramms von Fig. 4 erläutert.

Zunächst wird in Schritt 36 die Pumpe 2 auf Nennleistung eingestellt und es werden die Regelkreise aller Verbraucher 3 bis 5 eingeschaltet. Die Regler 18 bis 20 stellen daraufhin die Drosselventile 15 bis 17 durch die Stellsignale y₃ bis y₅ so ein, dass sich die an jedem Verbraucher 3 bis 5 erfasste Regelgröße x₃ bis x₅ einem jeweiligen Sollwert annähert.

In Schritt 37 wird dann geprüft, ob noch kein Drosselventil 15 bis 17 ganz offen ist. Diese Information erhält der Zentralregler 21 über die Meldesignale z₃ bis z₅ von den Reglern 18 bis 20. Falls dies zutrifft, ist die Pumpenleistung insgesamt höher als es nötig wäre, um alle Verbraucher 3 bis 5 mit ausreichenden Volumenströmen q₃ bis q₅ zu versorgen.

In diesem Fall werden als nächstes in Schritt 38 über die Druckdifferenzen Δp₂ bis Δp₅ der Gesamtvolumenstrom Q und die Volumenströme der einzelnen Verbraucher 3 bis 5 erfasst. Aus den Kennlinien (Druckdifferenz als Funktion des Volumenstromes) der einzelnen Verbraucher sowie dem Gesamtströmungswiderstand, die in der zuvor beschriebenen Initialisierungsphase ermittelt wurden, wird dann in Schritt 39 berechnet, wie weit die Leistung der Pumpe abgesenkt werden kann, bis bei einem der Verbraucher 3 bis 5 keine Drosselung des Volumenstromes durch das zugeordnete Drosselventil 15 bis 17 mehr erforderlich ist. Diese minimale Leistung wird der Pumpe 2 von dem Zentralregler 21 über die Drehzahl N vorgegeben.

In Schritt 40 wird geprüft, ob der normale Betrieb des Systems fortgeführt werden soll oder nicht. Falls ja erfolgt ein Sprung zurück zu Schritt 37. Andernfalls endet der normale Betrieb. Wie das System 1 in diesem Fall heruntergefahren und sicher in den Ruhezustand gebracht wird, ist hier nicht von Interesse.

Falls die Überprüfung in Schritt 37 ergeben hat, dass bereits bei einem der Verbraucher 3 bis 5 das zugehörige Drosselventil 15 bis 17 ganz geöffnet ist, wird in Schritt 41 überprüft, ob dieser Verbraucher nicht einen größeren Volumenstrom benötigt als er im gegenwärtigen Zustand des Systems 1 erhalten kann. Diese Information erhält der Zentralregler 21 über eines der Meldesignale z₃ bis z₅ von demjenigen der Regler 18 bis 20, welcher das von ihm kontrollierte Drosselventil bereits ganz geöffnet hat. Der betreffende Regler ermittelt dies im Fall eines bereits ganz geöffneten Drosselventils aus der Regeldifferenz zwischen dem Sollwert und dem Istwert der jeweiligen Regelgröße.

Falls der Verbraucher mit ganz geöffnetem Drosselventil einen größeren Volumenstrom benötigt als er momentan vorliegt, wird in Schritt 42 die Pumpenleistung um ein definiertes Maß erhöht, wobei das Ausmaß dieser Erhöhung von der Größe besagter Regeldifferenz abhängen kann. Andernfalls unterbleibt die Ausführung von Schritt 42. Anschließend wird in jedem Fall zu Schritt 37 zurückgesprungen. Dies führt dazu, dass über die Schritte 37, 41 und 42 führende Schleife solange durchlaufen und folglich die Pumpenleistung solange erhöht wird, bis der betreffende Verbraucher einen mindestens ausreichenden Volumenstrom erhält.

Grundsätzlich ist es auch möglich, dass im Laufe der Zeit bei mehreren der Verbraucher 3 bis 5 das zugehörige Drosselventil 15 bis 17 ganz geöffnet wird. In diesem Fall wird die Überprüfung in Schritt 41 bei allen in diesem Zustand befindlichen Verbrauchern durchgeführt.

Es leuchtet ein, dass das vorausgehend beschriebene Verfahren dazu führt, dass im Normalbetrieb abgesehen von einer anfänglichen Einschwingphase nahezu ständig irgendeiner der Verbraucher 3 bis 5 mit ganz geöffnetem Drosselventil 15 bis 17 betrieben wird und dass die Pumpe 2 folglich mit einer Leistung betrieben wird, die im zeitlichen Mittel deutlich unterhalb der Nennleistung liegt, wenn man davon ausgeht, dass die Nennleistung so ausgelegt ist, dass sie den höchstmöglichen Volumenstrombedarf des Systems 1 erfüllen kann.

Es versteht sich, dass die den einzelnen Verbrauchern 3 bis 5 zugeordneten Regler 18 bis 20 baulich auch mit dem Zentralregler 21 vereinigt sein können. Entscheidend ist nur, dass ein übergeordneter Regelkreis für die Pumpe 2 und mehrere untergeordnete Regelkreise für die einzelnen Drosselventile 15 bis 17 vorgesehen sind.

Die Ermittlung der Systemparameter bei der Inbetriebnahme eines so ausgestatteten Systems kann automatisiert werden. Ein ggf. langwieriges und teures Anpassen von Blenden, wie es oft bei herkömmlichen Systemen nötig ist, kann entfallen.

Soweit hier von Leitungen bzw. von einem Leitungssystem die Rede ist, versteht es sich, dass sämtliche Aussagen gleichermaßen für Rohrleitungen, Schlauchleitungen, Strömungskanäle mit eckiger Querschnittsform sowie für Leitungssysteme, die Abschnitte aus mehreren verschiedenen Arten von geschlossenen strömungsführenden Leitungen enthalten, gelten. Alle derartigen Varianten von Leitungssystemen sollen vom Schutz der Patentansprüche umfasst sein.

## Patentansprüche

1. Verfahren zum Betrieb eines strömungstechnischen Leitungssystems mit einer aktiven Komponente, die in dem System einen Volumenstrom eines Mediums erzeugt, und mehreren zueinander parallel geschalteten Strömungskanälen, die von der aktiven Komponente gemeinsam mit dem Volumenstrom des Mediums versorgt werden, wobei jeder Strömungskanal einen individuellen Volumenstrombedarf des Mediums hat, der bei zumindest einem Teil der Strömungskanäle zeitlich variabel ist,
**dadurch gekennzeichnet, dass** in jedem Strömungskanal (3, 4, 5) mit zeitlich variablem Volumenstrombedarf der jeweilige Volumenstrom (q₃, q₄, q₅) in Abhängigkeit von einer dem Strömungskanal (3, 4, 5) zugeordneten Regelgröße (x₃, x₄, x₅) individuell gedrosselt wird, und dass zusätzlich der von der aktiven Komponente (2) erzeugte Volumenstrom (Q) insgesamt so geregelt wird, dass in zumindest einem der Strömungskanäle (3, 4, 5) keine individuelle Drosselung des dortigen Volumenstromes (q₃, q₄, q₅) erforderlich ist.

2. Verfahren nach Anspruch 1,
**dadurch gekennzeichnet, dass** vor der Inbetriebnahme des Systems 1 nacheinander für jeden einzelnen Strömungskanal (3, 4, 5) der Zusammenhang zwischen der über dem Strömungskanal (3, 4, 5) abfallenden Druckdifferenz (Δp₃, Δp₄, Δp₅) und dem durch den Strömungskanal (3, 4, 5) fließenden Volumenstrom (q₃, q₄, q₅) ermittelt wird.

3. Verfahren nach Anspruch 2,
**dadurch gekennzeichnet, dass** vor der Inbetriebnahme des Systems 1 zur Ermittlung besagten Zusammenhangs bei Nennbetrieb der aktiven Komponente (2), deren Kennlinienfeld bekannt ist, alle Strömungskanäle (3, 4, 5) bis auf denjenigen, für den der Zusammenhang ermittelt werden soll, geschlossen werden, dass an dem einzigen nicht geschlossenen Strömungskanal (n) das Ausmaß der Drosselung variiert wird und dabei die über dem Strömungskanal (n) abfallende Druckdifferenz Δpₙ und die über der aktiven Komponente abfallende Druckdifferenz (Δp₂) gemessen werden, und dass anhand des bekannten Kennlinienfeldes der aktiven Komponente (2) jedem Wert der über dem nicht geschlossenen Strömungskanal (n) gemessenen Druckdifferenz (Δpₙ) ein Wert des Volumenstromes (qₙ) zugeordnet wird.

4. Verfahren nach einem der vorausgehenden Ansprüche,
**dadurch gekennzeichnet, dass** vor der Inbetriebnahme des Systems 1 bei Nennbetrieb der aktiven Komponente (2) und im ungedrosselten Zustand sämtlicher Strömungskanäle (3, 4, 5) die Druckdifferenz (Δp₂) über der aktiven Komponente (2) gemessen und anhand des bekannten Kennlinienfeldes der aktiven Komponente (2) der minimale Gesamtströmungswiderstand des an der aktiven Komponente (2) angeschlossenen Leitungssystems (3 bis 17) ermittelt wird.

5. Verfahren nach einem der vorausgehenden Ansprüche,
**dadurch gekennzeichnet, dass** der im regulären Betrieb des Systems 1 durch die Regelung einzustellende Wert des gesamten Volumenstromes (Q) anhand der für einzelnen Strömungskanäle (3, 4, 5) geltenden Zusammenhänge zwischen den jeweiligen Druckdifferenzen (Δp₃, Δp₄, Δp₅) und Volumenströmen (q₃, q₄, q₅), sowie anhand des minimalen Gesamtströmungswiderstandes des an der aktiven Komponente (2) angeschlossenen Leitungssystems (3 bis 17) ermittelt wird.

6. Verfahren nach einem der vorausgehenden Ansprüche,
**dadurch gekennzeichnet, dass** im regulären Betrieb des Systems 1 der Volumenstrombedarf eines Strömungskanals (3, 4, 5), der ungedrosselt betrieben wird, fortlaufend überwacht wird, und dass bei einem Anstieg dieses Volumenstrombedarfes der Wert des von der aktiven Komponente (2) insgesamt erzeugten Volumenstromes (Q) erhöht wird.

7. Verfahren nach einem der vorausgehenden Ansprüche,
**dadurch gekennzeichnet, dass** der von der aktiven Komponente (2) insgesamt erzeugte Volumenstrom (Q) über die Antriebsleistung der aktiven Komponente (2) eingestellt wird.

## Claims

1. Method for operating a fluidic pipeline system having an active component which generates a volume flow of a medium in the system, and having a plurality of flow channels connected in parallel with one another and jointly supplied with the volume flow of the medium by the active component, wherein each flow channel has an individual volume flow requirement of the medium, said requirement being variable over time for at least some of the flow channels,
**characterised in that** in each flow channel (3, 4, 5) having a time-variable volume flow requirement the respective volume flow (q₃, q₄, q₅) is individually throttled as a function of a control variable (x₃, x₄, x₅) assigned to the flow channel (3, 4, 5), and **in that** in addition the volume flow (Q) generated by the active component (2) is controlled overall in such a way that no individual throttling of the local volume flow (q₃, q₄, q₅) is required in at least one of the flow channels (3, 4, 5).

2. Method according to claim 1,
**characterised in that** prior to the startup of the system 1 the correlation between the pressure difference (Δp₃, Δp₄, Δp₅) dropping across the flow channel (3, 4, 5) and the volume flow (q₃, q₄, q₅) flowing through the flow channel (3, 4, 5) is determined in turn for each individual flow channel (3, 4, 5).

3. Method according to claim 2,
**characterised in that** prior to the startup of the system 1, in order to determine said correlation during rated operation of the active component (2), whose set of characteristic curves is known, all flow channels (3, 4, 5) with the exception of the one for which the correlation is to be determined are closed, **in that** the degree of throttling at the single unclosed flow channel (n) is varied and in the process the pressure difference (Δpₙ) dropping across the flow channel (n) and the pressure difference (Δp₂) dropping across the active component are measured, and **in that** on the basis of the known set of characteristic curves of the active component (2) a value of the volume flow (qₙ) is assigned to each value of the pressure difference (Δpₙ) measured across the unclosed flow channel (n).

4. Method according to one of the preceding claims,
**characterised in that** prior to the startup of the system 1, during rated operation of the active component (2) and in the unthrottled state of all of the flow channels (3, 4, 5), the pressure difference (Δp₂) is measured across the active component (2) and on the basis of the known set of characteristic curves of the active component (2) the minimum overall flow resistance of the pipeline system (3 to 17) connected to the active component (2) is determined.

5. Method according to one of the preceding claims,
**characterised in that** the value of the overall volume flow (Q) that is to be set by the controller during normal operation of the system 1 is determined on the basis of the correlations applying to individual flow channels (3, 4, 5) between the respective pressure differences (Δp₃, Δp₄, Δp₅) and volume flows (q₃, q₄, q₅), as well as on the basis of the minimum overall flow resistance of the pipeline system (3 to 17) connected to the active component (2).

6. Method according to one of the preceding claims,
**characterised in that** during normal operation of the system 1 the volume flow requirement of a flow channel (3, 4, 5) which is operated unthrottled is monitored continuously, and **in that** if there is an increase in said volume flow requirement the value of the volume flow (Q) generated overall by the active component (2) will be increased.

7. Method according to one of the preceding claims,
**characterised in that** the volume flow (Q) generated overall by the active component (2) is set via the drive capacity of the active component (2).

## Revendications

1. Procédé de fonctionnement d'un système de conduites relevant de la technique des fluides avec un composant actif qui génère un débit volumique de fluide dans le système et avec plusieurs canaux d'écoulement qui sont montés en parallèle entre eux et que le composant actif alimente conjointement avec le débit volumique du fluide, chaque canal d'écoulement ayant un besoin individuel en débit volumique de fluide qui est variable dans le temps pour au moins une partie des canaux d'écoulement, **caractérisé en ce que**, dans chaque canal d'écoulement (3, 4, 5) avec un besoin en débit volumique variable dans le temps, le débit volumique respectif (q₃, q₄, q₅) est étranglé individuellement en fonction d'une grandeur de réglage (x₃, x₄, x₅) associée au canal d'écoulement (3, 4, 5) et **en ce que**, additionnellement, le débit volumique (Q) généré par le composant actif (2) est réglé globalement de manière telle que, dans au moins l'un des canaux d'écoulement (3, 4, 5), un étranglement individuel du débit volumique (q₃, q₄, q₅) qui y règne n'est pas nécessaire.

2. Procédé selon la revendication 1, **caractérisé en ce que**, avant la mise en service du système 1, le rapport entre la différence de pression (Δp₃, Δp₄, Δp₅) qui diminue au-dessus du canal d'écoulement (3, 4, 5) et le débit volumique (q₃, q₄, q₅) qui traverse le canal d'écoulement (3, 4, 5) est déterminé successivement pour chaque canal d'écoulement individuel (3, 4, 5).

3. Procédé selon la revendication 2, **caractérisé en ce que**, avant la mise en service du système 1, pour déterminer ledit rapport lorsque le composant actif (2) dont le champ de courbes caractéristiques est connu est en fonctionnement nominal, tous les canaux d'écoulement (3, 4, 5) sauf celui pour lequel le rapport doit être déterminé sont fermés, **en ce que** l'importance de l'étranglement subit des variations au niveau de l'unique canal d'écoulement non fermé (n), la différence de pression (Δpₙ) qui diminue au-dessus de canal d'écoulement (n) et la différence de pression (Δpₙ) qui diminue au-dessus du composant actif étant mesurées, et **en ce que**, à l'aide du champ connu de courbes caractéristiques du composant actif (2), une valeur du débit volumique (qₙ) est associée à chaque valeur de la différence de pression (Δpₙ) mesurée au-dessus du canal d'écoulement non fermé (n).

4. Procédé selon l'une des revendications précédentes,
**caractérisé en ce que**, avant la mise en service du système 1, lorsque le composant actif (2) est en fonctionnement nominal et que tous les canaux d'écoulement (3, 4, 5) sont à l'état non étranglés, la différence de pression (Δp₂) à travers le composant actif (2) est mesurée et la résistance minimale de l'écoulement total du système de conduites (3 à 17) raccordé au composant actif (2) est déterminée à l'aide du champ connu de courbes caractéristiques du composant actif (2).

5. Procédé selon l'une des revendications précédentes,
**caractérisé en ce que** la valeur du débit volumique total (Q) à régler par le réglage pendant le fonctionnement normal du système 1 est déterminée à l'aide des rapports valables pour les différents canaux d'écoulement (3, 4, 5) entre les différences de pression respectives (Δp₃, Δp₄, Δp₅) et les débits volumiques respectifs (q₃, q₄, q₅) ainsi qu'à l'aide de la résistance minimale de l'écoulement total du système de conduites (3 à 17) raccordé au composant actif (2).

6. Procédé selon l'une des revendications précédentes,
**caractérisé en ce que**, pendant le fonctionnement normal du système 1, le besoin en débit volumique d'un canal d'écoulement (3, 4, 5) qui fonctionne non étranglé est surveillé continuellement et **en ce que**, en cas d'augmentation de ce besoin en débit volumique, la valeur du débit volumique (Q) total généré par le composant actif (2) est augmentée.

7. Procédé selon l'une des revendications précédentes,
**caractérisé en ce que** le débit volumique (Q) total généré par le composant actif (2) est réglé via la puissance d'entraînement du composant actif (2).
